(19) Europäisches Patentamt

European Patent Office

Office européen des brevets

(11) **EP 1 729 115 A2**

(12) **EUROPÄISCHE PATENTANMELDUNG**

(43) Veröffentlichungstag:
06.12.2006 Patentblatt 2006/49

(51) Int Cl.:
***G01N 21/88*** *(2006.01)*     ***G01N 21/49*** *(2006.01)*
***G01B 11/25*** *(2006.01)*

(21) Anmeldenummer: 06010989.9

(22) Anmeldetag: **29.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.05.2005 DE 102005025009**

(71) Anmelder: **Massen Machine Vision Systems GmbH**
**78467 Konstanz (DE)**

(72) Erfinder: **Dr. Jörg Eberhardt**
**88074 Sibratshaus (DE)**

(74) Vertreter: **Degwert, Hartmut**
**Prinz & Partner GbR**
**Rundfunkplatz 2**
**80335 München (DE)**

(54) **Verfahren und Anordnung zur flächenhaften Charakterisierung und Qualitätskontrolle von zumindestens teilweise optisch transluzenten und intern optisch streuenden Produkten**

(57) Produkte mit einer in der oberflächennahen Zone zumindestens teilweisen optischen Transluzenz und Lichtstreuung im Innern dieser Zone wie beispielweise Keramiken, aus Partikeln gepresste oder gesinterte Produkte, organische Materialien werden zerstörungsfrei, berührungslos und bildgebend auf lokale physikalische Eigenschaften und Qualitäten untersucht, indem ein feines Lichtmuster auf die unbewegte oder bewegte Oberfläche projiziert wird, das Projektionsbild mit einem Bild- geber erfasst wird und die lokale Bildschärfe, welche durch die Material- und Oberflächeneigenschaften moduliert wird, bestimmt wird. Durch Verwendung verschiedener Wellenlängen und Projektionsmuster können zahlreiche oberflächennahe Defekte und charakteristische Materialeigenschaften im Vergleich zu Referenzwerten auch in der Produktionslinie mit einfachen Mitteln geprüft werden.

EP 1 729 115 A2

**Beschreibung**

Die Erfindung betrifft ein Verfahren und eine Anordnung zur zerstörungsfreien Qualitätskontrolle und Charakterisierung von Gegenständen oder Produkten mit einer zumindest teilweisen optischen Transluzenz und einer optischen Lichtstreuung im Innern.

Die Charakterisierung keramischer und ähnlicher, auf gepressten und/oder gesinterten Partikeln aufgebauter Produkte ist besonders im Bereich der Hochleistungskeramiken eine wichtige Inspektionsaufgabe zur Sicherstellung der Qualität. Zahlreiche dieser Produkte werden in sehr anspruchsvollen Anwendungen wie Dieselpartikelfilter, keramische Träger für elektronische Schaltungen, medizinische Keramiken usw. eingesetzt. Vor dem Brennen oder Sintern werden diese Produkte oft als "Grünkörper" bezeichnet.

Es gibt eine ganze Reihe von zerstörungsfreien Prüfmethoden auf der Basis von Röntgen-Transmissions- und -Rückstreuungstechniken, von Ultraschall-Remission usw. mit der Zielsetzung, Fehler in der oberflächennahen Zone sowie in der Tiefe dieser Produkte zu erkennen. Solche Fehler sind z.B. lokale Inhomogenitäten durch eine lokal fehlerhafte Partikelgrösse oder durch fehlerhafte Füllung der Pressform, durch eingepresste Kontaminationen, durch Spannungsrisse beim Brennen usw.. Diese Verfahren sind in der Regel aufwendige, eine Probe abscannende Laborgeräte, welche schlecht oder gar nicht in den Produktionstakt eingebunden werden können. Es besteht daher ein hoher wirtschaftlicher Bedarf an Verfahren, welche schnell arbeiten und vorzugsweise nicht nur im Labor, sondern auch in der Produktionslinie eingesetzt werden können und welche zumindest eine Reihe der wichtigen Qualitätskenngrössen lokal überprüfen und Fehlstellen detektieren können.

Ähnliche Aufgabenstellungen ergeben sich bei der automatischen visuellen Inspektion von Holzprodukten, bei welchen der Farbunterschied zwischen einem gesunden Ast und dem normalen Holz sehr gering ist. Die Festigkeit eines Holzkörpers hängt aber wesentlich von der Anzahl der Äste ab; diese unterscheiden sich wesentlich in ihrer mechanischen Dichte und der damit korrelierenden lateralen Lichtausbreitung entlang der Holzfaserstruktur.

Die vorliegende Erfindung geht von der Erkenntnis aus, daß zahlreiche dieser interessierenden Produkte eine gewisse, zumindestens bei einigen Wellenlängen vorhandene optische Transluzenz besitzen, d.h. daß von aussen auf das Produkt gerichtetes Licht geeigneter Wellenlänge in die oberflächennahen Schichten eindringt und sich dort durch Lichtleitung und Streuung von aussen sichtbar zweidimensional ausbreitet.

Es ist aus dem Bereich der automatischen Inspektion von Holzoberflächen in der Produktionsline bekannt, diesen dort "Tracheid-Effekt" genannten Effekt auszunutzen, um gesunde Astlöcher zu erkennen (siehe z.B. Patent EP 0 765 471 B1, Firma IVP Integrated Vision Products, Schweden). Hierbei wird mit einem Laser eine Lichtlinie auf die Oberfläche projiziert und die lokale Verbreiterung oder Verdünnung dieser Linie mit einer Matrix-Kamera beobachtet. Hierdurch können lokale Veränderungen der Materialeigenschaft wie die Dichte quer zur projizierten Linie beobachtet werden. In Längsrichtung der projizierten Linie wird der Tracheid-Effekt durch die Beleuchtungslinie selbst verdeckt. Die Ausrichtung der Kamera und das Laserlinienprojektors ist kritisch; insbesondere bei gewölbten oder geschüsselten Oberflächen führt es zu Meßfehlern, wenn die Laserlinie nicht genau parallel zur Zeilenstruktur der Matrixkamera ausgerichtet ist. Damit ist es auch nicht möglich, dreidimensionale Oberflächen wie z.B. Möbelfronten auszuwerten.

Die Fa. Baumer Optronic stellt einen in dem US Patent US 6449036 beschriebenen Laserscanner her, welcher mit Hilfe eines Drehspiegels einen Lichtpunkt zeilenförmig über die zu inspizierende, sich vorwärt bewegende Oberfläche führt und in jeder Position den Durchmesser und die Anisotropie des Lichtpunktes ermittelt.. Dieses technisch sehr aufwendige Verfahren kann den Lichthofeffekt in allen Richtungen ermitteln und ist damit aussagekräftiger als das Verfahren nach EP 0 765 471 B1. Es ist wegen der Begrenzung des flying-spot-Scanners aber nicht geeignet, sehr schnell bewegte Oberflächen zu erfassen. Durch die telezentrische Abbildung kann es darüber hinaus keine grossen Breiten erfassen, da das Sichtfeld gleich dem Durchmesser des telezentrischen Spiegels sein muss.

Es besteht daher ein technisches und wirtschaftliches Interesse an einem einfachen, robusten und kostengünstigen Verfahren, um grosse, auch nicht plane, bewegte und unbewegte Oberflächen, welche eine gewisse Transluzenz und laterale Lichtausbreitung besitzen, automatisch mit dem Lichthofeffekt visuell zu charakterisieren und zu prüfen.

Hierbei wird als wesentlicher neuer Erfindungsgedanke der physikalische Effekt genutzt, dass die Verbreiterung oder Verschmälerung des Lichthofes direkt mit der Bildschärfe des beobachteten aufprojizierten Lichtpunktes oder der aufprojizierten Lichtlinie korreliert und dass es verfahrensmäßig und vom Aufwand der Anordnung einfach ist, die lokale Bildschärfe in einem Bild aus einem feinen und dichten Muster von Lichtelementen, welche einen Lichthofeffekt auslösen, mit Verfahren der Bildverarbeitung zu messen.

Die Lösung dieser Aufgabe erfolgt durch das in den Patentansprüchen angegebene Verfahren. Gegenstand der Erfindung ist ferner die in den Patentansprüchen angegebene Anordnung zur Durchführung des Verfahrens.

Insbesondere wird erfindungsgemäß mindestens ein fein-aufgelöstes Licht-Muster auf die Oberfläche aufprojiziert. Mit Hilfe mindestens eines bildgebenden Abtasters wird die Bildschärfe im Bild und/oder Bildausschnitt des oder der von dem mindestens einen bildgebenden Abtasters erzeugten Bildes lokal bestimmt. Aus der charakteristischen Veränderung der Bildschärfe im Vergleich zu Referenzwerten werden diejenigen lokalen physikalischen Effekte der Oberfläche und der oberflächennahen Zone berührungsfrei bestimmt und/oder überprüft, welche die Licht-Remission in unmittelbarer Nähe jedes aufprojizierten Musterelementes beeinflussen.

Ein weiterer Erfindungsgedanke betrifft die lokale Auswertung statt direkt aus der Bildschärfe mit lokalen Merkmalen, welche mit der Bildschärfe korrelieren, wie die lokale Ortsfrequenz-Bandbreite, die lokale Varianz und ähnliche, dem Fachmann der Bildverarbeitung bekannten Merkmale, welche direkt mit der Bildschärfe zusammenhängen.

Ein weiterer Erfindungsgedanke betrifft die lokale richtungsgesteuerte Auswertung der Bildschärfe der aufprojizierten Muster oder der hiermit korrelierenden Merkmale zur Gewinnung von Informationen über die anisotropen physikalischen Eigenschaften der beobachteten Oberfläche .

Ein weiterer Erfindungsgedanken betrifft die gleichzeitige oder sequentielle Aufprojektion mehrerer feiner Muster mit jeweils unterschiedlichen Wellenlängen und/oder spektralen Zusammensetzungen und die spektral getrennte Auswertung der lokalen Bildschärfe und/oder der hiermit korrelierenden Merkmale zur Messung von physikalischen Eigenschaften der Oberfläche, bei welchen die Ausdehnung des Lichthofes von der Wellenlänge bzw. der spektralen Verteilung des projizierten Musters abhängt.

Ein weiterer Erfindungsgedanke besteht darin, die feinen Bestandteile des aufprojizierten Musters in ihrer Form so zu gestalten, dass die Form der entstehenden Lichthöfe eine besonders einfache Bestimmung der lokalen Bildschärfe ermöglicht.

Ein weiterer Erfindungsgedanke ist es, daß die zu prüfende Oberfläche sowohl unter einer gleichförmigen Beleuchtung geeigneter Wellenlängen als auch unter der Musterprojektion bildgebend erfasst wird, wobei diese beiden Bilder zeitlich nacheinander oder gleichzeitig aber spektral getrennt aufgenommen werden. Durch gewichtete Subtraktion der bei gleichförmiger Beleuchtung sichtbaren optischen Strukturen wie z.B. farblichen Aufdrucke, Zonen unterschiedlicher Reflexion, Zonen unterschiedlicher Orientierung der Oberflächennormalen u.ä. von dem Bild der feinen Muster wird erfindungsgemäß der Einfluss dieser optischen Strukturen vom Bild der lokalen Bildschärfe oder der hiermit korrelierenden Merkmale ein störungsfreies Lichthofbild gewonnen, welches nur die gewünschten physikalischen Eigenschaften der Oberfläche oder oberflächennahen Zonen ausdrückt, nicht aber die zur physikalischen Charaktierisierung störenden optisch-visuellen Eigenschaften.

Das erfindungsgemäße Verfahren sei am Beispiel der Prüfung der oberflächennahen Zonen einer ungebrannten keramischen Platte, eines sog. Grünlings, erklärt, wobei folgende Abbildungen verwendet werden:

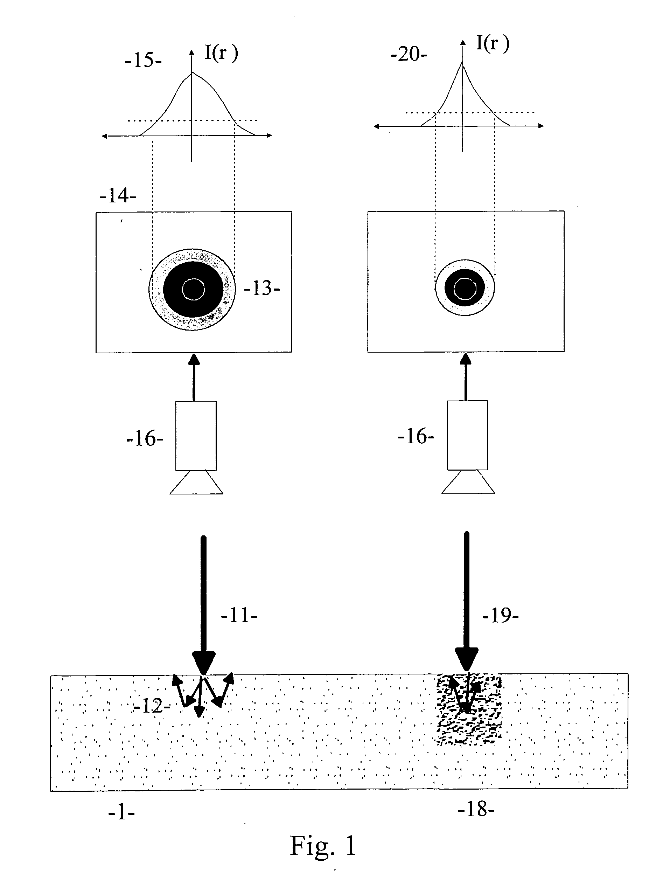

Fig. 1 zeigt, wie infolge der Transluzenz eines aus gepressten Partikeln bestehenden ungebrannten keramischen Produktes das eindringende Licht eines aufprojizierten Lichtpunktes durch die innere optische laterale Ausbreitung und Rückstreuung ein von aussen sichtbarer Lichthof um den aufprojizierten Punkt entsteht, dessen Eigenschaften u.a. von der Partikelgrösse, der Dichte sowie der Anisotropie des oberflächennahen Materials abhängen;

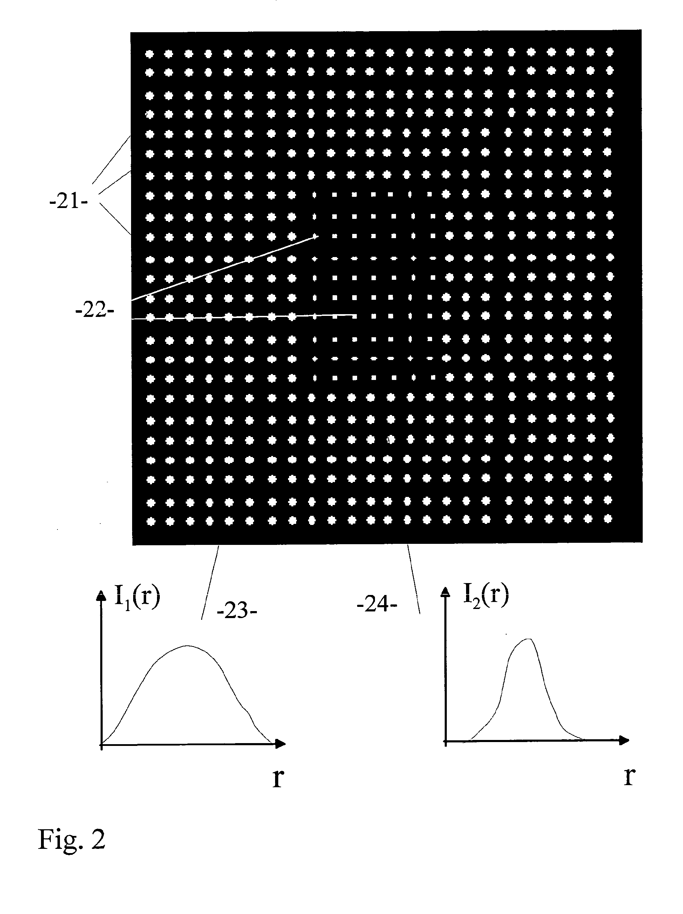

Fig. 2 zeigt beispielhaft, wie eine lokale rechteckige Zone einer keramischen Platte, welche infolge eines Produktionsfehlers eine höhere Materialdichte besitzt, dadurch erkannt wird, dass die Platte mit einem gleichförmigen Muster feinster heller Sturkuren beleuchtet wird und in der Zone höherer Materialdichte durch die dortige kleinere Ausprägung der Lichthöfe die lokale Bildschärfe zunimmt;

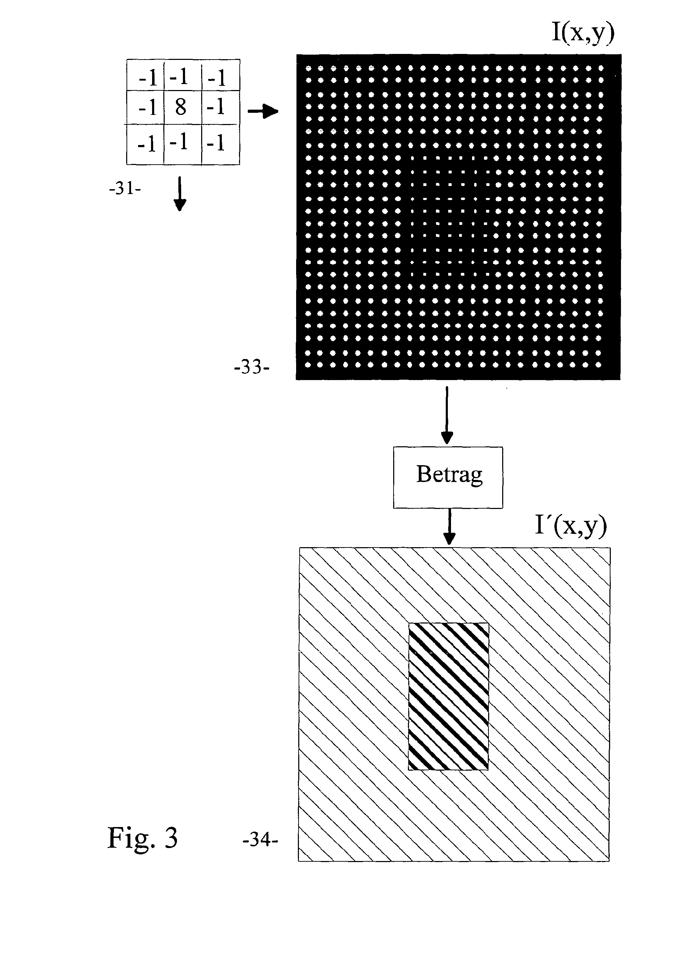

Fig. 3 verdeutlicht wie durch einen Faltungsoperator mit differenzierenden Eigenschaften und eine Betragsbildung ein Bild der lokalen Bildschärfe erzeugt wird, welches die lokalen, den Lichthofeffekt prägenden physikalischen Eigenschaften der Oberfläche abbildet.

Ein zu prüfender Körper, beispielhaft eine ebene, ungebrannte keramische Platte -1- wird nach Fig. 1 mit einem ersten Lichtpunkt -11- bestrahlt. Aus drucktechnischen Gründen werden die Lichtstrahle dunkel auf weissem Hintergrund, d.h. invers in der Zeichnung dargestellt. Die vorhande Transluzenz lässt das Licht zumindest in die oberflächennahen Zonen des Körpers eindringen; in dieser Eindringzone wird das Licht durch die Partikelstruktur in alle Richtungen, d.h. lateral und vertikal -12- gestreut. Das vertikal gestreute Licht verlässt die Oberfläche des Körpers und bildet um den beleuchtenden Bildpunkt — 11- einen Lichthof —13- (ähnlich wie der Lichthof um den nächtlichen Mond bei nebeliger Atmosphäre). Das Bild dieses Lichthofes -14- ist bei homogener und isotroper Partikelanordnung und einem kreisförmigen Lichtpunkt ebenfalls kreisförmig mit einer vom Zentrum aus radial abnehmenden Helligkeit I(r) -15-.

Die Grösse des Lichthofes kann durch ihren Durchmesser bei einem bestimmten prozentualen Abfall der Helligkeit, z.B. bei 10 % des Maximums, beschrieben werden. Die Aufnahme des Lichthofes geschieht mit einem bildgebenden Sensor —16- , vorzugsweise mit einer Kamera oder einem punktweise scannenden Abtaster. Die Auswertung der Lichthofgrösse geschieht damit nach bekannten Methoden der Bildverarbeitung an dem von dem bildgebenden Sensor erstellten Bild, vorzugsweise mit Hilfe eines Rechners, für jeden aufprojizierten Bildpunkt.

Beispielhaft befinde sich an einer zweiten Stelle —18- der Platte eine lokale Störung der Partikeldichte derart, daß die Dichte dort höher als spezifiziert ist. Wird diese Stelle mit einem Lichtpunkt -19- belichtet, so entsteht ein Lichthof —20- mit wesentlich geringerem Durchmesser.

Damit ist anschaulich verdeutlicht, daß mit Hilfe der technisch recht einfachen Anordnung von Lichtpunktprojektor und Bildgeber zumindest in der von der Transluzenz noch belichteten Schicht unterhalb der Oberfläche Störungen in der lokalen Partikeldichte zerstörungsfrei erkannt werden können. Neben der lokalen Partikeldichte gibt es eine Reihe weiterer Defekte, welche den Lichthof im Vergleich zu einer GUT-Referenz verändern, und zwar sowohl in seiner Grösse, Form, Helligkeit, Textur usw.. Dies sind z.B.

- Risse auf und unterhalb der Oberfläche welche, einen anistropen Lichthof bewirken

- Blasen, Kratzer, Hohlräume, Kontaminationen im Innern oder an der Oberfläche, welche einen in der Form und Helligkeit modulierten Lichthof hervorrufen.

Um die ganze Platte hochauflösend zu inspizieren (was z.B. für die Erkennung kleiner Risse erforderlich ist), müssen daher eine Vielzahl von Bildpunkten aufprojiziert werden und nacheinander jeder Lichthof einzeln ausgewertet werden. Es versteht sich von selbst, dass hierzu die optische Auflösung der Kamera wesentlich kleiner als der Durchmesser des Bildpunktes sein muss, um dessen Lichthof-Durchmesser auszumessen. Die Ausnutzung des Lichthofeffektes nach dem Stand der Technik erfordert daher:

- eine hochauflösende, teure Kamera und kleine Bildpunkte, sofern eine dichte Auswertung der Oberfläche gewünscht ist,

- eine aufwendige leistungsstarke Bildverarbeitung, da jeder Bildpunkt einzeln ausgewertet werden muss.

In der Regel wird daher heute nur eine geringe Anzahl von Bildpunkten projiziert und ausgewertet und damit keine ausreichend dichte Auswertung der zu prüfenden Oberfläche erreicht, oder das Verfahren wird auf Materialien mit extrem grossem Lichthofeffekt wie z.B. Holzoberflächen beschränkt.

Diese einzelne Auswertung des Durchmessers und der Form jedes einzelnen Lichtpunktes (beim Einsatz eines Laserscanner nach US 6449036 ) oder der Breite einer aufprojizierten Linie (beim Einsatz einer Matrixkamera nach EP 0 765 471 B1) ist technisch und von der erforderlichen Bildverarbeitung her sehr aufwendig. So wird bei dem Verfahren nach EP 0 765 471 B1 beispielsweise ein ganz besonderer, weltweit einmaliger CMOS Bildsensor eingesetzt, welcher neben jedem Bildpunkt einer Zeile einen eigenen Prozessor integriert hat.

Bei der Projektion eines linienhaften Musters nach EP 0 765 471 B1 müssen die projizierte Lichtlinie und die beobachtende Matrixkamera darüber exakt ausgerichtet sein; dies lässt sich bei räumlich gekrümmten Oberflächen wie geschüsselte Bretter im allgemeinen schon nicht mehr einhalten. Die Projektion einer Linie erzeugt darüberhinaus nur eindimensionale Lichthöfe quer zur Linie, so daß dieses Verfahren keine Effekte entlang der projizierten Lichtlinie erfasst.

Mit einer preiswerten Matrixkamera und einer einfachen Bildverarbeitung ist es nicht möglich, den Lichthof nach dem Stand der Technik schnell genug für die in Frage kommenden Produktionsgeschwindigkeiten auszuwerten.

Beide genannten patentierten Verfahren verlangen, dass sich das Produkt unter dem Lichthofsensor bewegt. Sie sind nicht einsetzbar bei einer unbewegten Produktoberfläche

Im Gegensatz hierzu beschreibt der Erfindungsgedanke ein Verfahren und eine Anordnung, welche mit einfachen, vorzugsweise Matrixkameras sowohl bewegte als auch ruhende Oberflächen mit dem Lichthofeffekt hochauflösend auswerten können.

Fig. 2 zeigt den Erfindungsgedanken beispielhaft an der Prüfung keramischer Grünlinge mit quadratischer Form. Ein hochdichtes Muster aus vielen einzelnen punktförmigen Lichtmusterelementen -21- wird auf die zu prüfende Oberfläche des Grünlings projiziert. Dieser habe in der Mitte einen Produktionsfehler, welcher sich in einer rechteckigen Zone -22- höherer Materialdichte äussert. Eine höhere Materialdichte bedeutet eine geringere laterale Ausbreitung und Rückstreuung des Lichthofes. Dies drückt sich durch kleinere Lichthöfe —23- um jede Lichtmarke innerhalb der dichten Zone im Vergleich zu den Lichthöfen in der normalen Zone -24- aus.

Erfindungsgemäß wird dieses aufprojizierte Punktemuster nicht Punkt für Punkt ausgewertet und der Durchmesser jedes Lichthofes bestimmt, sondern es wird die Tatsache genutzt, dass eine Reduzierung des Lichthofes mit einer Zunahme der lokalen Bildschärfe des aufprojizierten Bildes einher geht. Aus drucktechnischen Gründen können in dem für die Patentschriften verwendeten Strichtonverfahren (reine schwarz/weiss Wiedergabe) keine Grautöne dargestellt werden. Die kleineren Lichthöfe in der Zone hoher Materialdichte werden daher durch kleinere Punkte visualisiert. Der vergrössert dargestellte Helligkeitsverlauf $I_1(r)$ eines Schnittes durch einen Lichthof im Bereich normaler Materialdichte - 23- und der Helligkeitsverlauf $I_2(r)$ durch einen Lichthof in der Zone hoher Materialdichte -24- zeigt, dass die Steilheit dI(r)/dr bei einem grossen Lichthof kleiner ist als bei einem kleinen Lichthof. Anders ausgedrückt: das projizierte Muster erscheint sowohl für das menschliche Auge als auch für die beobachtende Kamera schärfer im Bereich hoher Materialdichte -22- als im Bereich normaler Materialdichte -21-.

Erfindungsgemäß wird diese lokale Bildschärfe dadurch bestimmt, daß das gesamte Bild mit einem differenzierenden Nachbarschaftsoperator gefaltet wird und der Mittelpunkt des Nachbarschaftsoperators durch den Betrag der Ableitung in dem Ausgangsbild gebildet wird.

Fig. 3 zeigt beispielhaft einen um die Bildkoordinate (x,y) zentrierten 3 x 3 Nachbarschaftsoperator -31-. mit den sich zu Null summierenden acht Faltungskoeffizienten —32- , welche so gewählt sind, dass in allen vier Raumrichtungen die Ableitung der Grauwerte innerhalb des Operators von dem Musterbild -33- mit einer rechteckigen Zone hoher Materialdichte gebildet wird. Der Betrag der Summe dieser Ableitungen bildet den Grauwert für den Bildpunkt I'(x,y), welcher als Ergebnis in das Bildschärfe-Bild —34- an der Stelle (x,y) eingetragen wird. Wegen der drucktechnischen Beschränkung auf Strichtonvorlagen sind hohe Grauwerte in Fig. 3 durch eine dichte Schraffur, niedrige Grauwert durch eine entsprechend weniger dichte Schraffur visualisiert.

Im Frequenzbereich wird diese Faltung auch als isotroper Hochpass beschrieben. Diese Art der Bildverarbeitung ist jedem Fachmann der Bildverarbeitung bekannt und in allen Textbüchern nachzulesen, so daß hierauf nicht näher eingegangen zu werden braucht, so z.B. Bernd Jähne "Handbook of Computer Vision and Applications, Academic Press, ISBN 0-12-379771-3 . Aus der Literatur sind eine Vielzahl anderer Verfahren bekannt, um die lokale Schärfe eines Bildes zu bestimmen so z.B:

- die lokale Varianz des Grauwerts in einem vorgegebenen Ortsfrequenzbereich

- die lokale Bandbreite der Ortsfrequenzen, berechnet aus der lokalen 2- dimensionalen Fourier-Transformation

usw.

Wichtig für die Bewertung des Erfindungsgedanken ist es, dass durch diese klassische Art der Bildauswertung des flächenhaft projizierten Lichtmusters die getrennte Ausmessung jedes einzelnen Lichthofdurchmessers entfällt und mit einem Rechenschritt aus dem Lichtmusterbild -33- ein neues Bildschärfe-Bild - 34- erzeugt wird, dessen Grauwerte die den Lichthofdurchmesser beeinflussenden physikalischen Grössen der Oberfläche und oberflächennahen Schichten des Prüflings wie Dichte, Anisotropie, Transluzenz, usw. abbilden.

Die eingesetzte Kamera kann eine geringere Auflösung haben als eine Kamera, welche jeden Lichthof einzeln genau ausmessen muss, so daß der Erfindunggedanken zu preisgünstigeren Lösungen führt.

Da die Projektion des Lichtmusters flächenmäßig erfolgt, kann das Verfahren auch bei unbewegten Prüfobjekten eingesetzt werden.

In vorteilhafter Weise wird bei bewegten Objekten eine stroboskopische Musterprojektion bzw. eine Bildaufnahme mit kurzer Belichtungszeit eingesetzt.

Um störende Moires zwischen dem periodischen Lichtmuster und der periodischen Pixel-Struktur des Bildsensors zu vermeiden, wird erfindungsgemäß ein nicht streng periodisches Lichtmuster gewählt.

Der Erfindungsgedanke ist keineswegs auf die Projektion punktförmiger Muster beschränkt.

So erlauben z.B. kleine linienhafte kreuzförmige Muster die einfachere Bestimmung der Anisotropie der Bildschärfe in vertikaler und in horizontaler Richtung durch entsprechende 1-dimensionale anisotrope Faltungsoperatoren und damit eine deutliche Beschleunigung gegenüber einer 2-dimensionalen Faltung.

Ein weiterer Erfindungsgedanke ist es, die projizierten Muster in ihrer Gestalt so zu wählen, dass sie mit der Pixel-Struktur des Bildaufnehmers keine störenden Moires ergeben.

Ein wesentlicher weiterer Erfindungsgedanke gegenüber dem Stand der Technik ist es, die Projektion des Musters mit einer elektromagnetischen Strahlung bei verschiedenen Wellenlängen bzw. verschiedener spektraler Zusammensetzung durchzuführen, um wellenlängenabhängige Materialeigenschaften der Oberfläche und oberflächennahen Zone zu erfassen.

Die Streuung S(λ) von Licht an Partikeln in einem optisch transparenten Medium ist mit

$$S(\lambda) \sim 1/\lambda^4 \hspace{3cm} [1]$$

extrem abhängig von der Wellenlänge. Sie nimmt mit dem Kehrwert der 4ten Potenz der Wellenlänge des beleuchteten Lichtes zu. Dementsprechend verändert sich auch der Lichthofdurchmesse absolut mit der Wellenlänge des belichteten Lichtes und relativ mit dem Verhältnis der Wellenlänge des belichteten Lichtpunktes zur Partikelgrösse.

Dieser Zusammenhang wird erfindungsgemäß zur Messung der lokalen Produktqualität ausgenutzt, indem eine Reihe von Projektionen mit Licht von vorgegebener Wellenlänge durchgeführt wird und aus der Bildschärfe bei den verschiedenen Wellenlängen auf die Verteilung der Partikelgrössen und ähnliche, von der Wellenlänge abhängige Materialeigenschaften geschlossen wird.

Erfindungsgemäß werden diese Materialeigenschaften abgeschätzt, indem das Projektionsmuster mit einem Licht bekannten Spektrums ausgeführt wird und aus dem veränderten Spektrum des Reflexionsbildes auf die wellenlängenabhängigen Materialeigenschaften geschlossen wird.

Ein weiterer Erfindungsgedanke ist es, mehrere Eigenschaften des Lichthofeffektes, wie z.B. der Lichthofdurchmesser bei verschiedenen Wellenlängen, zu einem vektoriellen Bild zusammenzufassen. Beispielsweise können die Anisotropie sowie der Lichthofdurchmesser bei zwei verschiedenen Wellenlängen gleichzeitig als 3-dimensionaler Merkmalsvektor pro Bildpunkt abgespeichert und z.B. als RGB Farbbild dargestellt werden.

Die Rückstreuung $S(\lambda)$ nimmt nach [1] extrem stark mit kürzer werdenden Wellenlänge zu. Dies spricht erfindungsgemäß für die Anwendung von blauem bis zu UV Licht.

Die Eindringtiefe $D(\lambda)$, d.h. die infolge der Transluzenz belichtete Zone im Innern der Platte, nimmt hingegen mit länger werdenen Wellenlängen, d.h. zum nahen Infrarot hin, zu. Dies spricht bei der Exploration möglichst tiefer Schichten für eine Anwendung von Wellenlängen im nahen Infrarot.

Erfindungsgemäß wird die Partikelgrösse in Abhängigkeit von der Tiefe im Produktinnern dadurch indirekt ermittelt, dass über die Bildschärfe die Lichthofgrösse als Funktion der Wellenlänge gemessen wird.

Erfindungsgemäß wird ein inverses Lichtmuster, bestehend aus einem hellen Hintergrund mit feinen dunklen Stukturen wie z.B. kleine dunkle Punkte in einer regelmäßigen oder zufälligen Anordnung, aufprojiziert. Die Grösse des lokalen Lichthofeffektes kann dann nicht nur über die Bildschärfe, sondern direkt auch über die Zunahme der Helligkeit dieser dunklen Strukturen erkannt werden. Diese kann entweder durch einzelne Auswertung jeder dunklen Struktur für sich oder ähnlich wie oben beschrieben durch isotrope oder anisotrope lokale Bildoperatoren wie lokale Bildschärfe, lokale Varianz, lokale mittlere Helligkeiten, lokale Grauwerhistogramme, gemessen werden. Insbesondere bei homogen-hellen Prüfobjekten, wie z.B. keramische Platten, kann hierdurch aus der Veränderung der lokalen Helligkeit direkt auf die den Lichthofeffekt beeinflussenden Materialeigenschaften geschlossen werden.

Erfindungsgemäß werden die aufprojizierten Strukturen so klein gewählt, dass sie von der Pixelgröße des Bildsensors nicht mehr formgebend aufgelöst werden können. Durch die lokal integrierende Wirkung der (im Verhältnis zum Muster) zu grossen Bildpunkte entsteht ein Grauwertbild, bei welchem der lokale Grauwert direkt proportional zum lokalen Lichthofeffekt ist, ohne dass es einer Bildverarbeitung wie der Berechnung der lokalen Bildschärfe bedarf.

Erfindungsgemäß kann gleichzeitig zum lokalen Lichthofeffekt auch der 3D-Verlauf der Oberfläche (z.B. die Planität, die lokale Dicke) bestimmt werden, indem die feinen Muster unter einem Triangulationswinkel bezogen auf die Kameraachse projiziert werden und die lokale Dicke aus der lateralen Verschiebung des Musters im Bild bezüglich einer Referenzebene bestimmt wird. Solche Verfahren sind dem Fachmann der Photogrammetrie und der 3D-Bildverarbeitung bekannt. Das Wesen des Erfindungsgedanke besteht darin, die physikalischen Eigenschaften der Oberfläche und ihre 3D-Form gleichzeitig zu erfassen.

Der Erfindungsgedanke betrifft demnach zusammengefasst und über das vorgestellte Beispiel einer flachen keramischen Scheibe verallgemeinert die lokale Auswertung der Produktqualität und/oder der physikalischen Eigenschaften aller Produkte, welche eine gewisse zumindest in den oberflächennahen Zonen existierende Tranzluzenz und eine Lichtstreuung im Innern dieser Zone aufzeigen. Die lokal messbaren physikalischen Eigenschaften sind alle diejenigen, welche den bekannten Lichthofeffekt auslösen, wobei der Erfindungsgedanke ein besonders einfaches, auch für unbewegte Produkte geeignetes Verfahren angibt, nämlich die Berechnung der lokalen Bildschärfe aus dem flächenhaft mit einem feinen Lichtmuster bestrahlten Prüfling. Neben dem beschriebenen Beispiel der Inspektion von keramischen Grünlingen sind weitere Anwendungsgebiete die Inspektion von organischen Oberflächen wie Holz, der Haut von Menschen und Tieren, transparent oder semi-transparent beschichtete Oberflächen, Flüssigkeiten mit Dispersionen, extrudierte Filme, Gläser usw.. Durch das erfindungemässe Verfahren der über die Bildschärfe indirekten Messung des Lichthofeffektes bei unterschiedlichen Wellenlängen ergibt sich eine grosse Zahl von Anwendungen zur bildhaften, d.h. lokal aufgelösten Darstellung von physikalischen Material- und Qualitätseigenschaften mit Hilfe einer kostengünstigen Anordnung von Kameras und Bildrechner.

Damit ist das erfindungsgemäße Verfahren auch geeignet, als sog. Bildsensor für Materialeigenschaften gestaltet zu werden.

## Patentansprüche

**1.** Verfahren zur zerstörungsfreien Qualitätskontrolle und Charakterisierung von Gegenständen oder Produkten mit einer zumindest teilweisen optischen Transluzenz und einer optischen Lichtstreuung im Innern,
**dadurch gekennzeichnet daß**
mindestens ein fein-aufgelöstes Licht-Muster von Musterelementen auf die Oberfläche der Produkte aufprojiziert wird, daß mit Hilfe mindestens eines bildgebenden Abtasters die Bildschärfe in dem von dem Abtaster erzeugten Bild und/oder Bildausschnitt lokal bestimmt wird und dass aus der charakteristischen Veränderung der Bildschärfe im Vergleich zu Referenzwerten diejenigen lokalen physikalischen Effekte der Oberfläche und der oberflächennahen Zone berührungsfrei bestimmt und/oder überprüft werden, welche die Licht-Remission in unmittelbarer Nähe jedes aufprojizierten Musterelementes beeinflussen.

**2.** Verfahren nach Anspruch 1,
**dadurch gekennzeichnet dass**
das die lokale Bildschärfe in einzelnen Richtungen getrennt gemessen wird und damit die Anisotropie der physikalischen Eigenschaften der Oberfläche und oberflächennahen Zonen bestimmt und/oder überprüft werden.

**3.** Verfahren nach Anspruch 1 bis 2 ,
**dadurch gekennzeichnet, daß**
das aufprojizierte Licht-Muster mit Licht einer vorgegebenen spektralen Verteilung durchgeführt wird und dass die physikalischen Eigenschaften der Oberfläche und der oberflächennahen Zone aus der lokalen Bildschärfe des aufprojizierten Musters und/oder der spektralen Veränderung des remittierten Lichtes im Vergleich zu der vorgegebenen spektralen Verteilung bestimmt und/oder überprüft werden.

**4.** Verfahren nach Anspruch 1 oder 2,
**dadurch gekennzeichnet dass**
das aufprojizierte Licht-Muster mit Licht einer vorgegebenen Polarisation durchgeführt wird und dass die physikalische Eigenschaften der Oberfläche und der oberflächennahen Zone aus der lokalen Bildschärfe und/oder der Veränderung der Polarisation des remittierten Lichtes im Vergleich zur vorgegebenen Polarisation bestimmt und/oder überprüft wird.

**5.** Verfahren nach einem der Ansprüche 1 bis 3,
**dadurch gekennzeichnet dass**
das aufprojizierte Licht-Muster nacheinander mit einer elektromagnetischen Strahlung verschiedener Wellenlänge durchgeführt wird und dass die physikalischen Eigenschaften der Oberfläche und der oberflächennahen Zone aus den lokalen Bildschärfen bei den verschiedenen Wellenlängen bestimmt und/oder überprüft wird.

**6.** Verfahren nach einem der Ansprüche 1 bis 5,
**dadurch gekennzeichnet dass**
zur Unterdrückung des Einflusses der visuellen optischen Eigenschaften der Oberfläche in einem ersten Schritt ein erstes Bild erzeugt wird, indem die Oberfläche gleichmäßig mit Licht beaufschlagt wird und eine Bildaufnahme der optischen Eigenschaften unter dieser Beleuchtung durchgeführt wird, dass in einem zweiten Schritt ein zweites Bild erzeugt wird, indem das feinaufgelöste Licht-Muster auf die Oberfläche aufprojiziert wird, daß mit Hilfe des Abtasters die Bildschärfe im zweiten Bild oder einem Ausschnitt desselben lokal bestimmt wird, dass durch Verknüpfung des zweiten mit dem ersten Bild diejenigen lokalen visuellen Eigenschaften aus dem zweiten Bild eliminiert oder verinngert werden, welche von den visuellen optischen Eigenschaften bedingt sind, und dass aus diesem verechneten Bild mit Hilfe der charakteristischen Veränderung der Bildschärfe im Vergleich zu Referenzwerten diejenigen lokalen physikalischen Effekte der Oberfläche und der oberflächennahen Zone berührungsfrei bestimmt und/oder überprüft werden, welche die Licht-Remission in unmittelbarer Nähe jedes aufprojizierten Musterelementes beeinflussen.

**7.** Verfahren nach einem der Ansprüche 1 bis 6,
**dadurch gekennzeichnet dass**
das aufprojizierte Licht-Muster aus hellen Strukturen besteht.

**8.** Verfahren nach einem der Ansprüche 1 bis 6,
**dadurch gekennzeichnet dass**
das aufprojizierte Licht-Muster aus dunklen Strukturen besteht.

**9.** Verfahren nach einem der Ansprüche 1 bis 8,
**dadurch gekennzeichnet dass**
zur Vermeidung der Bildung von Moires durch ein regelmäßigen Muster und eine regelmäßige Bildpunktstruktur des bildgebenden Abtasters das aufprojizierte Licht-Muster aus zufällig oder pseudo-zufällig positionierten und/oder geformten Musterelementen zusammengesetzt wird.

**10.** Verfahren nach einem der Ansprüche 1 bis 9,
**dadurch gekennzeichnet daß**
bei zu prüfenden und/oder zu charakterisierenden Oberflächen konstanter Helligkeit im Bereich der für die Projektion des Licht-Musters verwendeten Wellenlängen die Musterelemente so eng benachbart projiziert werden, dass sie von der Bildpunkt-Struktur des bildgebenden Abtasters nicht mehr aufgelöst werden können, und dass die physikalischen Eigenschaften der Oberfläche und der oberflächennahen Zone im Vergleich zu einer Referenz aus den lokalen Helligkeiten bestimmt und/oder überprüft werden.

11. Verfahren nach einem der Ansprüche 1 bis 10,
   **dadurch gekennzeichnet dass**
   zusätzlich zur Bestimmung und/oder Charakterisierung der physikalischen Eigenschaften der Oberfläche und der oberflächennahen Zone aus der lokalen Bildschärfe der bildgebende Abtaster und der zur Projektion des Licht-Musters verwendete Lichtmusterprojektor in einer Triangulationsanordnung angeordnet sind und aus der lateralen Verschiebung des aufprojizierten Licht-Musters im Vergleich zu einer Referenzebene die lokale Produkthöhe und/oder Produktdicke bestimmt werden.

12. Verfahren nach einem der Ansprüche 1 bis 11
   **dadurch gekennzeichnet dass**
   mehrere Bilder der lokalen Bildschärfe, welche bei unterschiedlichen spektralen Verteilungen und/oder Polarisationen und/oder mit verschiedenen Licht-Mustern aufgenommen wurden, zu einem mehrdimensionalen Merkmalsbild zusammengefasst werden.

13. Anordnung zur zerstörungsfreien Qualitätskontrolle und Charakterisierung von Gegenständen oder Produkten mit einer zumindest teilweisen optischen Transluzenz und einer optischen Lichtstreuung im Innern, insbesondere zur Durchführung des Verfahrens nach einem der vorstehenden Ansprüche, **gekennzeichnet durch** eine Projektionseinrichtung, die ein fein-aufgelöstes Licht-Muster aus Musterelementen erzeugt und auf die Oberfläche des Gegenstands richtet, einen bildgebenden Abtaster, der das von der Oberfläche des mit dem Licht-Muster bestrahlten Gegenstands remittierte Licht aufnimmt, und eine Verarbeitungseinrichtung, der die von dem Abtaster gelieferten Bilddaten verarbeitet.

Fig. 1

Fig. 2

I(x,y)

-1 | -1 | -1
-1 | 8 | -1
-1 | -1 | -1

-31-

-33-

Betrag

I´(x,y)

Fig. 3          -34-

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0765471 B1
- US 6449036 B

**In der Beschreibung aufgeführte Nicht-Patentliteratur**

- **BERND JÄHNE.** Handbook of Computer Vision and Applications. Academic Press